# EUROPÄISCHE PATENTANMELDUNG

(11) **EP 4 516 172 A1**
(43) Veröffentlichungstag der Anmeldung: **05.03.2025**
(21) Anmeldenummer: 24188549.0
(22) Anmeldetag: 15.07.2024
(51) Int. Cl.: A47J 31/60

(54) **KAFFEEAUTOMAT MIT EINER REINIGUNGSVORRICHTUNG UND COMPUTERPROGRAMMPRODUKT**

(30) Priorität: 28.08.2023 DE 102023208226
(71) Anmelder: BSH Hausgeräte GmbH, 81739 München (DE)
(72) Erfinder: Losbichler, Matthias, 84574 Taufkirchen (DE); Buchner, Albert, 83349 Palling (DE); Mirbeth, Sebastian, 83374 Traunwalchen (DE); Kochan, Alex, 83358 Seebruck (DE)

(57) **Zusammenfassung**

Die Erfindung betriff einen Kaffeeautomaten (1) mit einer Reinigungsvorrichtung (2) und einer Steuerung, sowie auch ein diesbezügliches Computerprogrammprodukt.

## Beschreibung

Die vorliegende Erfindung betrifft einen Kaffeeautomaten mit einer Reinigungsvorrichtung, sowie ein entsprechendes Computerprogrammprodukt.

Bei Kaffeeautomaten mit einer Reinigungsvorrichtung, wie sie z. B. als automatische Entkalkungsvorrichtung aus der DE 10 2011 081 010 A1 bekannt ist, rückt die eigentliche "Tätigkeit" bei einem Reinigungsvorgang eher in den Hintergrund. Denn der Automat führt die Entkalkung im Wesentlichen selbstständig durch. Dennoch ist während einer solchen Entkalkung kein Bezug von Kaffeegetränken möglich.

Zudem muss unter Umständen eine erforderliche Servicetätigkeit, z. B. eine Entkalkung, nötigenfalls zwingend durchgeführt werden, da ansonsten aus Sicherheitsgründen ein weiterer Getränkebezug maschinenseitig unterbunden wird. Die Getränkezubereitung wird in solchen Fällen erst nach einer Entkalkung wieder freigegeben, wie z. B. aus der EP 3 616 576 A1 bekannt.

Gerade bei Kaffeeautomaten mit einer automatischen Entkalkungsvorrichtung ist Bedienpersonen in der Regel nicht bewusst, wann genau die Servicetätigkeit erforderlich ist, oder stattfindet. Jedoch können eben während solcher Servicetätigkeiten, z. B. während einer Entkalkung, kein Getränke bezogen werden. Nachteilig wäre es daher, wenn die Servicetätigkeit, z. B. die Entkalkung, automatisch zur Unzeit erforderlich ist oder stattfindet, z. B., wenn die Bedienperson ein Kaffeegetränk beziehen möchte oder gar Besuch hat und viele Kaffeegetränke bezogen werden sollen. Daher ist es bekannt, z.B. aus der DE 10 2013 105 162 A1, die Servicetätigkeit je zu einer festgelegten Zeit ablaufen zu lassen, z.B. in jeder Nacht. Dadurch kann jedoch ggf. auch Reinigungsmittel verschwendet werden, beispielsweise an Tagen, an denen nur wenige Getränke bezogen wurden. Daher schlägt die DE 10 2013 105 162 A1 als Alternative vor, die Servicetätigkeit nach einer festen Reichweite zu starten. Dies birgt jedoch wiederum die Gefahr, dass sie für die Bedienperson zur Unzeit stattfindet.

Eine Aufgabe der vorliegenden Erfindung ist es daher, die genannten Nachteile zu verbessern, insbesondere einen Kaffeeautomaten mit einer Reinigungsvorrichtung weiter zu verbessern und ganz besonders den Bedienkomfort auf nachhaltige Weise zu erhöhen.

Diese Aufgabe wird durch einen Kaffeeautomaten mit den Merkmalen des Anspruchs 1 gelöst sowie auch durch ein Computerprogrammprodukt mit den Merkmalen des Anspruchs 10. Vorteilhafte Weiterbildungen der Erfindung sind Gegenstand der abhängigen Ansprüche.

Demgemäß weist der Kaffeeautomat eine Reinigungsvorrichtung und eine Steuerung auf. Erfindungsgemäß ist die Steuerung eingerichtet und programmiert, die Reinigungsvorrichtung zu einem vordefinierten Zeitpunkt zum Durchführen eines Reinigungsprogramms zu aktivieren, wenn die Steuerung ein Erfüllen einer von mindestens zwei verschiedenen Ereignisbedingungen erfasst oder bezogen hat. Dadurch kann einerseits verhindert werden, dass die Reinigungstätigkeit, z. B. die Entkalkung, automatisch zur Unzeit erfolgt, weil vordefinierte Zeitpunkt entsprechend vordefiniert werden, z.B. auf Mitternacht oder 3 Uhr morgens etc. Gleichermaßen kann dadurch verhindert werden, dass unnötig Reinigungsmittel verschwendet wird, z.B., weil die Ereignisbedingung nicht eingetreten ist und eine Reinigung noch nicht nötig ist. Dadurch kann besonders der Bedienkomfort auf nachhaltige Weise erhöht werden.

Unter einer Reinigungsvorrichtung soll hier insbesondere eine Automatische Reinigungsvorrichtung für eine Brüheinheit des Kaffeeautomaten verstanden werden, jedoch ebenso eine automatische Entkalkungsvorrichtung für ein Fluidsystem des Kaffeeautomaten sowie eine automatische Pflegevorrichtung für Teile des Fluidsystems, oder jegliche Kombinationen daraus.

Bei einer vorteilhaften Weiterbildung der erfindungsgemäßen Lösung ist eine erste Ereignisbedingung der zwei verschiedenen Ereignisbedingungen das Erreichen einer vordefinierten Menge an gefördertem Fluid, insbesondere Wasser, seit einem vorhergehenden aktivieren der Reinigungsvorrichtung. Dadurch kann z.B. eine unnötige Verschwendung von Reinigungsmittel am vordefinierte Zeitpunkt, z.B. auf Mitternacht oder 3 Uhr morgens etc., vermieden werden, wenn seit dem vorhergehenden aktivieren der Reinigungsvorrichtung erst wenig Fluid gefördert wurde.

Bei einer weiteren vorteilhaften Weiterbildung der erfindungsgemäßen Lösung ist eine zweite Ereignisbedingung der zwei verschiedenen Ereignisbedingungen ein Bezug von mindestens einer vordefinierten Anzahl von Getränken am aktuellen Tag. Dadurch kann einerseits sichergestellt werden, dass die automatische Reinigung zu am vordefinierte Zeitpunkt, z.B. auf Mitternacht oder 3 Uhr morgens etc., nur dann durchgeführt wird, wenn an dem entsprechenden Tag auch die vordefinierte Anzahl von Getränken tatsächlich bezogen wurde. Insbesondere kann dies besondere Relevanz in einem Intensivnutzungsmodus erlagen und in diesem Fall besonders vorteilhaft sein.

Bei einer weiteren vorteilhaften Weiterbildung der erfindungsgemäßen Lösung ist die Steuerung eingerichtet und programmiert, mindestens zwei verschiedene Betriebsmodi des Kaffeeautomaten in Bezug auf die Reinigungsvorrichtung zur Auswahl anzubieten, in denen je eine der mindestens zwei verschiedenen Ereignisbedingungen zur Anwendung gebracht wird. Dadurch kann die Bedienung des Kaffeeautomaten besonders vorteilhaft an die dementsprechenden Bedürfnisse der jeweiligen Bedienperson angepasst werden.

Bei einer weiteren vorteilhaften Weiterbildung der erfindungsgemäßen Lösung wird in einem Normalmodus die erste Ereignisbedingung der zwei verschiedenen Ereignisbedingungen, das Erreichen einer vordefinierten Menge an gefördertem Fluid, zur Anwendung gebracht. Dadurch kann beispielsweise einem Nutzungsverhalten mit einem durchschnittlichen Kaffeekonsum besonders komfortabel und gleichermaßen nachhaltig Rechnung getragen werden. Denn bei derartigem Kaffeekonsum kann eine automatische Reinigung nicht an jedem Tag bzw. in der darauffolgenden Nacht nötig sein und somit gegenüber einer herkömmlichen Lösung weiter Reinigungsmittel eingespart werden.

Bei einer weiteren vorteilhaften Weiterbildung der erfindungsgemäßen Lösung wird in einem Intensivnutzungsmodus die zweite Ereignisbedingung der zwei verschiedenen Ereignisbedingungen, ein Bezug von mindestens einer vordefinierten Anzahl von Getränken am aktuellen Tag, zur Anwendung gebracht. Dadurch kann beispielsweise einem Nutzungsverhalten mit einem überdurchschnittlichen Kaffeekonsum besonders komfortabel und gleichermaßen nachhaltig Rechnung getragen werden. Denn bei derartigem Kaffeekonsum wird eine automatische Reinigung an jedem Tag bzw. in der darauffolgenden Nacht nötig sein, an dem der Kaffeeautomat in Betrieb ist. Dadurch kann einerseits die Betriebssicherheit durch tägliche automatische Reinigung besonders komfortabel gewährleistet werden und andererseits eine Verschwendung von Reinigungsmittel an Tagen ohne einen Kaffeebezug vermieden werden.

Bei einer weiteren vorteilhaften Weiterbildung der erfindungsgemäßen Lösung ist das Erreichen einer vordefinierten Menge an gefördertem Fluid auf 7 Liter festgelegt. Dadurch kann beispielsweise bei einem Nutzungsverhalten mit einem durchschnittlichen Kaffeekonsum eine automatische Reinigung, insbesondere eine automatische Entkalkung, erst nach mehreren Tagen nötig sein. Somit kann in diesem Fall gegenüber einer herkömmlichen Lösung mit täglicher Reinigung erheblich Reinigungsmittel eingespart werden. Dennoch kann die Reinigung dann an dem Tag, an dem die 7 Liter erreicht sind, zur vordefinierten Zeit, z.B. nachts, erfolgen - und nicht zur Unzeit für die Bedienperson. Dadurch kann der Bedienkomfort auf nachhaltige Weise erhöht werden.

Bei einer weiteren vorteilhaften Weiterbildung der erfindungsgemäßen Lösung ist die vordefinierte Anzahl von Getränken am aktuellen Tag auf mindestens ein Getränk festgelegt. Dadurch kann beispielsweise bei einem Nutzungsverhalten mit einem überdurchschnittlichen Kaffeekonsum eine automatische Reinigung an jedem Tag erfolgen, an dem der Kaffeeautomat in Betrieb war und daher, gemessen am üblichen Nutzungsverhalten eine Reinigung nötig sein wird.

Bei einer weiteren vorteilhaften Weiterbildung der erfindungsgemäßen Lösung erfasst die Steuerung anhand des Nutzungsverhaltens, insbesondere der im Durchschnitt täglich bezogenen Tassenanzahl, dass der Betrieb im Intensivnutzungsmodus angezeigt ist und bringt selbsttätig die zweite Ereignisbedingung der zwei verschiedenen Ereignisbedingungen zur Anwendung. Dadurch kann auf nachhaltige Weise der Bedienkomfort erheblich erhöht werden.

Die eingangs genannten Aufgabe wird auch durch ein Computerprogrammprodukt gelöst, das Befehle umfass, die bei der Ausführung des Programms durch eine Steuerung eines Kaffeeautomaten bewirken, dass die Steuerung gemäß der vorhergehenden Beschreibung programmiert ist. Da das Computerprogrammprodukt auch noch nach einem Kauf des Kaffeeautomaten, der eine Reinigungsvorrichtung und eine Steuerung umfasst, über eine Datenschnittstelle und eine App z. B. über das Internet bezogen und in die Steuerung geladen werden kann, ist es im Prinzip möglich, jeden geeigneten bestehenden Automaten in die Lage zu versetzten, die genannten Vorteile nutzten zu können. Daher muss hierfür an Sich nicht extra ein neuer Automat hergestellt werden, was sich besonders vorteilhaft auf die Nachhaltigkeit auswirkt. Insbesondere wird daher ermöglicht, den Bedienkomfort auf besonders nachhaltige Weise zu verbessern.

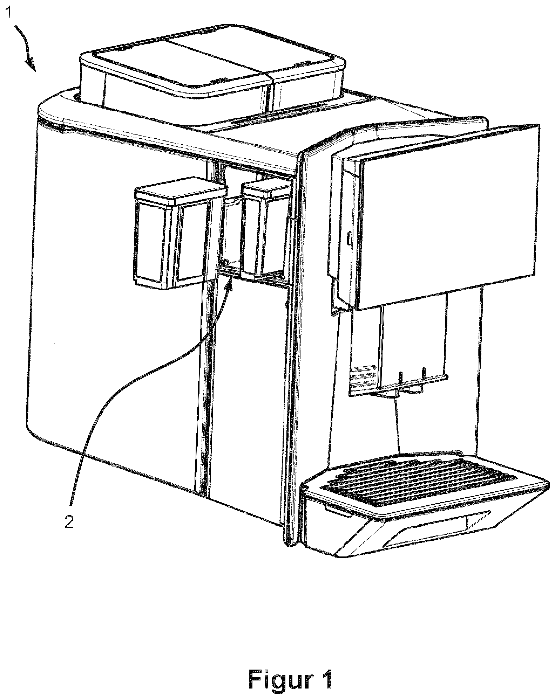

Weitere Vorteile und vorteilhafte Ausgestaltungen ergeben sich aus der im Folgenden in Verbindung mit der einzigen Figur 1 beschriebenen Ausführungsform. Es zeigt:
- Figur 1: einen Kaffeeautomaten mit einer Reinigungsvorrichtung.

In Figur 1 ist ein Kaffeeautomat 1 dargestellt, der über eine Reinigungsvorrichtung 2 und eine nicht dargestellte Steuerung umfasst. Die Steuerung eingerichtet und programmiert, die Reinigungsvorrichtung 2 zu einem vordefinierten Zeitpunkt zum Durchführen eines Reinigungsprogramms zu aktivieren, wenn die Steuerung ein Erfüllen einer von mindestens zwei verschiedenen Ereignisbedingungen erfasst oder bezogen hat.

Eine erste Ereignisbedingung der zwei verschiedenen Ereignisbedingungen ist das Erreichen einer vordefinierten Menge an gefördertem Wasser seit einem vorhergehenden aktivieren der Reinigungsvorrichtung 2. Eine zweite Ereignisbedingung der zwei verschiedenen Ereignisbedingungen ist ein Bezug von mindestens einem Getränk am aktuellen Tag.

Die Steuerung ist dabei eingerichtet und programmiert, zwei verschiedene Betriebsmodi des Kaffeeautomaten 1 in Bezug auf die Reinigungsvorrichtung 2 zur Auswahl anzubieten, in denen je eine der zwei genannten Ereignisbedingungen zur Anwendung gebracht wird.

Dabei wird in einem Normalmodus die erste Ereignisbedingung der zwei verschiedenen Ereignisbedingungen zur Anwendung gebracht, die hier das Erreichen der vordefinierten Menge an gefördertem Fluid von 7 Litern ist. In einem Intensivnutzungsmodus wird hingegen die zweite Ereignisbedingung zur Anwendung gebracht, wobei die vordefinierte Anzahl von Getränken am aktuellen Tag hier auf ein Getränk festgelegt ist.

Dies wird dadurch erreicht, dass in die Steuerung ein Computerprogrammprodukt geladen ist, das Befehle umfasst, die bei der Ausführung des Programms durch die Steuerung des Kaffeeautomaten 1 bewirkt, dass die Steuerung gemäß der vorhergehenden Beschreibung programmiert ist. Somit kann der Bedienkomfort auf besonders nachhaltige Weise zu erhöht werden.

Die im Ausführungsbeispiel dargestellten Bestandteile, wie z. B. Reinigungsvorrichtung 2, sowie deren Größenverhältnisse zueinander sind grundsätzlich nicht als maßstabsgerecht anzusehen. Vielmehr können einzelne Elemente zur besseren Darstellbarkeit und/oder zum besseren Verständnis übertrieben dick oder groß dimensioniert dargestellt sein. Die Erläuterung des erfindungsgemäßen Kaffeeautomaten 1 und der Reinigungsvorrichtung 2 anhand der beschriebenen Ausführungsbeispiele ist nicht als Beschränkung der Erfindung auf diese zu betrachten. Vielmehr umfasst die Erfindung jedes neue Merkmal sowie jede Kombination von Merkmalen, auch wenn dieses Merkmal oder diese Kombination selbst nicht explizit in den Patentansprüchen oder den Ausführungsbeispielen angegeben ist.

### BEZUGSZEICHENLISTE

- 1: Kaffeeautomat
- 2: Reinigungsvorrichtung

## Patentansprüche

1. Kaffeeautomat (1) mit einer Reinigungsvorrichtung (2) und einer Steuerung, **dadurch gekennzeichnet, dass** die Steuerung eingerichtet und programmiert ist, die Reinigungsvorrichtung (2) zu einem vordefinierten Zeitpunkt zum Durchführen eines Reinigungsprogramms zu aktivieren, wenn die Steuerung ein Erfüllen einer von mindestens zwei verschiedenen Ereignisbedingungen erfasst oder bezogen hat.

2. Kaffeeautomat (1) nach Anspruch 1, **dadurch gekennzeichnet, dass** die Steuerung so programmiert ist, dass eine erste Ereignisbedingung der zwei verschiedenen Ereignisbedingungen das Erreichen einer vordefinierten Menge an gefördertem Fluid, insbesondere Wasser, seit einem vorhergehenden aktivieren der Reinigungsvorrichtung (2) ist.

3. Kaffeeautomat (1) nach Anspruch 1 oder 2, **dadurch gekennzeichnet, dass** die Steuerung so programmiert ist, dass eine zweite Ereignisbedingung der zwei verschiedenen Ereignisbedingungen ein Bezug von mindestens einer vordefinierten Anzahl von Getränken am aktuellen Tag ist.

4. Kaffeeautomat (1) nach einem der Ansprüche 1 bis 3, **dadurch gekennzeichnet, dass** die Steuerung programmiert ist, mindestens zwei verschiedene Betriebsmodi des Kaffeeautomaten (1) in Bezug auf die Reinigungsvorrichtung (2) zur Auswahl anzubieten, in denen je eine der mindestens zwei verschiedenen Ereignisbedingungen zur Anwendung gebracht wird.

5. Kaffeeautomat (1) nach einem der Ansprüche 2 bis 4, **dadurch gekennzeichnet, dass** die Steuerung so programmiert ist, dass in einem Normalmodus die erste Ereignisbedingung der zwei verschiedenen Ereignisbedingungen, das Erreichen einer vordefinierten Menge an gefördertem Fluid, zur Anwendung gebracht wird.

6. Kaffeeautomat (1) nach einem der Ansprüche 3 bis 5, **dadurch gekennzeichnet, dass** die Steuerung so programmiert ist, dass in einem Intensivnutzungsmodus die zweite Ereignisbedingung der zwei verschiedenen Ereignisbedingungen, ein Bezug von mindestens einer vordefinierten Anzahl von Getränken am aktuellen Tag, zur Anwendung gebracht wird.

7. Kaffeeautomat (1) nach Anspruch 5, **dadurch gekennzeichnet, dass** die Steuerung so programmiert ist, dass das Erreichen einer vordefinierten Menge an gefördertem Fluid auf 7 Liter festgelegt ist.

8. Kaffeeautomat (1) nach Anspruch 6, **dadurch gekennzeichnet, dass** die Steuerung so programmiert ist, dass die vordefinierte Anzahl von Getränken am aktuellen Tag auf mindestens ein Getränk festgelegt ist.

9. Kaffeeautomat (1) nach einem der Ansprüche 6 bis 8, **dadurch gekennzeichnet, dass** die Steuerung programmiert ist, dass sie anhand des Nutzungsverhaltens, insbesondere der im Durchschnitt täglich bezogenen Tassenanzahl, erfasst, dass der Betrieb im Intensivnutzungsmodus angezeigt ist und selbsttätig die zweite Ereignisbedingung der zwei verschiedenen Ereignisbedingungen zur Anwendung bringt oder deren Anwendung vorschlägt.

10. Computerprogrammprodukt, umfassend Befehle, die bei der Ausführung des Programms durch eine Steuerung eines Kaffeeautomaten (1) bewirkt, dass die Steuerung gemäß einem der Ansprüche 1 bis 9 programmiert ist.
